# EUROPÄISCHE PATENTANMELDUNG

(11) **EP 3 476 524 A1**
(43) Veröffentlichungstag der Anmeldung: **01.05.2019**
(21) Anmeldenummer: 17198873.6
(22) Anmeldetag: 27.10.2017
(51) Int. Cl.: B23K 37/04, B23Q 1/03, B23K 26/08, B23K 26/38

(54) **WERKSTÜCKAUFLAGE EINER BEARBEITUNGSMASCHINE FÜR FLÄCHIGE WERKSTÜCKE**

(71) Anmelder: Bystronic Laser AG, 3362 Niederönz (CH)
(72) Erfinder: STALDER, Peter, 3076 Worb (CH); BOSSONI, Sergio, 1040 Wien (AT)
(74) Vertreter: Schwarz und Baldus Patentanwälte

(57) **Zusammenfassung**

Die Erfindung betrifft eine Werkstückauflage (31) für eine Bearbeitungsmaschine (15) für flächige Werkstücke (24), wobei die Werkstückauflage (31) mehrere Auflagestellen (39) für die Werkstücke (24) ausbildende Auflageelemente (35) aufweist, die eine Werkstückauflageebene (36) für das flächige Werkstück (24) aufspannen, wobei eine Überführeinrichtung (22) zum Überführen wenigstens eines der Auflageelemente (35) von einer ersten Position in wenigstens eine weitere Position vorgesehen ist. Dabei ist zumindest ein Auflageelement (35) dazu konfiguriert, auch unter Auflast eines Werkstücks (24) durch eine Bewegung parallel zur Werkstückauflageebene (36) von der ersten Position in die wenigstens eine weitere Position überführt zu werden. Des Weiteren betrifft die Erfindung eine Bearbeitungsmaschine (15) mit einer solchen Werkstückauflage (31) sowie ein Verfahren zum Bearbeiten eines Werkstücks (24).

## Beschreibung

Die Erfindung betrifft eine Werkstückauflage einer Bearbeitungsmaschine für flächige Werkstücke nach dem Oberbegriff des Anspruchs 1. Weiter betrifft die Erfindung eine Bearbeitungsmaschine für flächige Werkstücke mit einer derartigen Werkstückauflage nach dem Anspruch 11 und ein Verfahren zum Bearbeiten eines flächigen Werkstücks mit einer derartigen Bearbeitungsmaschine nach Anspruch 12.

Heutzutage weisen vollautomatische oder halbautomatische Bearbeitungsmaschinen für flächige Werkstücke eine Werkstückauflage auf, welche über mehrere hundert Bearbeitungsprozesse eine stabile Auflage des zu bearbeitenden Werkstücks sicherstellen muss. Die Werkstückauflage, welche auch als Auflagestelle bzw. Auflagerost bezeichnet wird, umfasst mehrere Auflageelemente mit Tragpunkten, auf welche das Werkstück aufliegt. Auflagestellen bzw. Tragpunkte sind zueinander beabstandet, sodass bereits bearbeitete Werkstückteile des Werkstücks, beispielsweise ausgeschnittene Werkstückteile, zwischen den Auflageelementen durchfallen können. Eine derartige Bearbeitungsmaschine weist in der Regel ein relativ zur Werkstückauflage bewegbares Bearbeitungswerkzeug auf, welches beim Bearbeiten des Werkstücks mit den Auflageelementen in Kontakt kommen kann und diese dabei beschädigen können, was in weitere Folge zum zwingenden Austausch von stark beschädigten Auflageelementen führt.

Die DE 10 2005 025 889 B4 zeigt einen Laserbearbeitungstisch zur Abstützung eines plattenförmigen Werkstücks mit mehreren länglichen Auflageelementen, welche zwischen einer Abstützposition und einer Schutzposition bewegbar angeordnet sind. Die länglichen Werkstückauflagen werden in eine Richtung quer zu der von der Auflageebene aufgespannten Werkstückauflageebene bewegt und werden in deren Schutzposition von einem Abdeckmittel vor dem Laserschneidstrahl geschützt.

Nachteilig an dieser bekannten Lösung ist, dass keine stabile Auflage des Werkstücks im Arbeitsbereich des Laserstrahls, insbesondere bei kleinen Werkstücken, sichergestellt werden kann. Weiter nachteilig ist, dass für jedes der länglichen Werkstückauflagen ein eigenes Abdeckmittel zur Verfügung gestellt werden muss, womit der gesamte Aufbau der Werkstückauflage sehr komplex ist und daher deren Herstellung äusserst kostspielig ist.

Die WO 2007/134628 A1 zeigt eine Laserschneidmaschine mit einer Werkstückauflage zur Aufnahme eines tafelförmigen Werkstücks. Die Werkstückauflage weist bewegbare Auflageelem ente mit Tragpunktspitzen auf, auf welche das tafelförmige Werkstück aufliegt, wobei die Auflageelemente der Werkstückauflage im unbeladenen Zustand mithilfe einer Verschiebungseinrichtung entsprechend des Schachtelungsplans positioniert werden können.

Nachteilig an dieser bekannten Lösung ist, dass der Schachtelungsplan der Gutteile am Werkstück bereits vor dem Beladen der Werkstückauflage bekannt sein muss, da die Auflageelemente vor dem Beladen der Werkstückauflage positioniert werden und nur so ein Überfahren der Auflageelemente mit dem Laserschneidstrahl im Schneidprozesses vermeidbar wird. Damit wird der gesamte Bearbeitungsprozess äusserst unflexibel.

Aufgabe der vorliegenden Erfindung ist es somit, eine Werkstückauflage für flächige Werkstücke sowie eine Bearbeitungsmaschine mit einer derartigen Werkstückauflage zu schaffen, welche die vorgenannten Nachteile nicht aufweist und insbesondere die Werkstückauflage und/oder das Bearbeitungswerkzeug der Bearbeitungsmaschine vor mechanischen Verformungen bewahrt, sowie die Oberfläche des Werkstücks geschont wird. Des Weiteren ist es die Aufgabe der vorliegenden Erfindung, ein Verfahren zum Bearbeiten eines Werkstücks mit einer solchen Bearbeitungsmaschine zu schaffen.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss der Erfindung weist eine Werkstückauflage für eine Bearbeitungsmaschine für flächige Werkstücke mehrere Auflagestellen für die Werkstücke ausbildende Auflageelemente auf. Die Auflageelemente spannen eine Werkstückauflageebene für das flächige Werkstück auf. Des Weiteren ist eine Überführeinrichtung zum Überführen wenigstens eines der Auflageelemente von einer ersten Position in wenigstens eine weitere Position vorgesehen. Dabei ist zumindest ein Auflageelement dazu konfiguriert, auch unter Auflast eines Werkstücks durch eine Bewegung parallel zur Werkstückauflageebene von der ersten Position in die wenigstens eine weitere Position überführt zu werden.

Somit muss der Bearbeitungsprozess hinsichtlich der Auflageelemente nicht angepasst werden, da einzelne Auflageelemente im Bedarfsfall von einer Position auf eine weitere Position in der Werkstückauflagenebene überführt werden und somit eine Kollision von Werkzeug und Werkstückauflage verhindert wird. Damit ist der gesamte Bearbeitungsprozess zeitsparend ausführbar. Des Weiteren ist der Arbeitsbereich des Werkzeugs am flächigen Werkstück, unabhängig von den Positionen der Auflageelemente auf der Werkstückauflage, bereits vor dem Beginn des Bearbeitungsprozesses definierbar und verbleibt somit unverändert.

In diesem Zusammenhang ist die Bedeutung der Begriffe "Überführen des zumindest einen Auflageelements von einer Position in wenigstens eine weitere Position" gleichbedeutend einer Verschiebung, Versetzung oder Umpositionierung des zumindest einen Auflageelements von einer Position in wenigstens eine weitere Position. Unter dem Begriff "Bearbeitungsprozess" fallen sämtliche Prozesse mit zumindest einem Prozessarbeitsschritt, welche mit einem Werkzeug zum Bearbeiten des flächigen Werkstücks durchgeführt werden. Darunter fallen nicht abschliessend aufgezählt, ein Schneiden, ein Bohren, ein Schweissen oder ein Anstechen.

Vorzugsweise weist das zumindest eine Auflageelement eine Rotationsachse auf, um die das zumindest eine Auflageelement rotierbar ist, wobei die Rotationsachse parallel zur Werkstückauflageebene ausgerichtet ist. Das zumindest eine Auflageelement ist somit entlang der Werkstückauflageebene bewegbar, ohne dass der Kontakt zum flächigen Werkstück verloren geht, wom it das flächige Werkstück stets stabil auf den Auflageelementen aufliegt.

Vorteilhaft weisen mehrere Auflageelemente jeweils eine Rotationsachse auf, um die das jeweilige Auflageelement rotierbar ist, wobei die Rotationsachsen parallel zur Werkstückauflageebene ausgerichtet sind. Damit sind mehrere Auflageelemente bewegbar, womit die Positionen der Auflageelemente an unterschiedliche Bearbeitungsprozesse flexibel anpassbar sind und die Bearbeitungsprozesse zeitsparend und somit kostensparend ausführbar sind. Vorzugsweise sind auch die Rotationsachsen der Auflageelemente zueinander parallel ausgerichtet.

Bevorzugt sind die Auflagestellen des zumindest einen Auflageelements mit einer reibungsvermindernden Beschichtung, insbesondere aus der Gruppe Molybdänbeschichtung, Molybdänsulfidbeschichtung, Graphitbeschichtung, Diamantbeschichtung, Kunststoffbeschichtung und Keramikbeschichtung ausgerüstet. Damit lässt sich die Überführung des zumindest einen Auflageelements, welches stets in Kontakt mit dem flächigen Werkstück ist, einfach von einer Position auf wenigstens eine weitere Position durchführen. Dabei muss keine Verschiebung des flächigen Werkstücks auf der Werkstückauflage erfolgen, womit eine Beschädigungen am flächigen Werkstück vermieden wird. Alternativ sind die Auflagestellen des zumindest einen Auflageelements mit einer beschädigungsvermindernden Beschichtung ausgebildet, z.B. einer Kunststoffbeschichtung oder einer Gummibeschichtung, so dass Sie keine Beschädigungen in Form von Einprägungen, Kratzern o.ä. am Werkstück verursachen und/oder das Werkstück keine Beschädigungen and den Auflagelementen verursacht.

Vorzugsweise ist eine Werkstückfixiereinrichtung zum Fixieren des flächigen Werkstücks vorgesehen, wodurch die Position des Werkstücks unverändert bleibt und ein vorab definierter Schachtelungsplan am Werkstück einfach und schnell bearbeitet werden kann.

Vorteilhaft ist die Werkstückfixiereinrichtung zum Fixieren des flächigen Werkstücks relativ zu dem zumindest einen überführbaren Auflageelement vorgesehen, womit das zumindest eine Auflageelement einfach aus dem Arbeitsbereich des Werkzeugs überführbar ist ohne das Werkstück zu bewegen.

Vorteilhaft umfasst die Fixiereinrichtung zumindest einen Anschlag, womit das flächige Werkstück präzise an der Bearbeitungsmaschine bzw. der Werkstückauflage angeordnet werden kann.

Bevorzugt ist das zumindest eine Auflageelement kreiszylindrisch ausgebildet, wobei die Auflagestellen an einer Zylindermantelfläche des zumindest einen Auflageelements ausgebildet sind. Die Zylindermantelfläche des zumindest einen Auflageelements reduziert eine mechanische Beeinflussung an dem flächigen Werkstück beim Überführen des zumindest einen Auflageelements von einer Position in wenigstens eine weitere Position. Beispielsweise wird dadurch das Entstehen einer Kerbe oder eines Kratzers am flächigen Werkstück verhindert.

Alternativ sind die Auflagestellen der Auflageelemente kugelförmig ausgebildet, womit eine mechanische Belastung an dem Werkstück besonders einfach reduziert wird. Dabei sind die kugelförmigen Auflageelemente willkürlich und frei beweglich an der Werkstückauflage angeordnet und in der Werkstückauflageebene bewegbar. Som it lässt sich zum indest ein kugelförmiges Auflageelement frei von einer Position in zumindest eine weitere Position überführen, wenn das Werkzeug in die Werkstückauflagenebene eindringt.

Vorteilhaft weist diese Werkstückauflage zumindest eine Begrenzung auf, welche die freie Bewegung der kugelförmigen Auflageelemente in der Werkstückauflageebene im Bereich der zumindest einen Begrenzung limitiert. Dadurch werden die kugelförmigen Auflageelemente auf der Werkstückauflage gehalten, sodass eine stabile Auflage des flächigen Werkstücks auf der Werkstückauflage gewährleistet ist.

Vorteilhaft ist die zumindest eine Begrenzung durch einen seitlich um die Werkstückauflage umlaufenden Rand ausgebildet, womit die frei beweglichen, kugelförmigen Auflageelemente nicht von der Werkstückauflage fallen können.

Alternativ oder ergänzend weist die Werkstückauflage zumindest eine weitere Begrenzung innerhalb der Werkstückauflage auf, womit die freie Bewegung der kugelförmigen Auflageelemente limitiert wird und somit eine verbesserte stabile Auflage des flächigen Werkstücks gewährleistet ist.

Vorzugsweise sind Mittel zur Detektion zumindest eines Auflageelements im Arbeitsbereich eines Werkzeugs der Bearbeitungsmaschine vorgesehen, die Detektionsdaten an die Überführeinrichtung weitergeben, um ein Überführen des zumindest einen Auflageelements von einer ersten Position in wenigstens eine weitere Position zu initiieren. Damit sind unerwünschte Positionen des zumindest einen Auflageelements vor der Ausführung eines Bearbeitungsschritts detektierbar, wobei das zumindest eine Auflageelement in weiterer Folge in eine weitere Position überführt wird. Somit ist eine Kollision des Werkzeugs der Bearbeitungsmaschine mit dem zumindest einen Auflageelement verhinderbar. Als Mittel zur Detektion sind nicht abschliessend aufgezählt Sensoren, wie eine Kamera, ein Abstandssensor oder ein positionssensitiver mechanischer Anschlag einsetzbar.

Vorteilhaft weist die Bearbeitungsmaschine eine Steuereinrichtung mit einer Recheneinrichtung zum Erstellen von Steuerbefehlen aus den von dem Mittel zur Detektion weitergeleiteten Detektionsdaten auf. Damit wird ein automatischer Bearbeitungsprozess ermöglicht.

Vorteilhaft ist die Steuereinrichtung der Bearbeitungsmaschine mit den Antriebseinrichtungen der Überführeinrichtung verbunden und leitet die erstellten Steuerbefehle an die entsprechenden Antriebseinrichtungen weiter, womit die Antriebseinrichtungen einen vollautomatischen Bearbeitungsprozess durchführen können.

Vorteilhaft weist die Steuereinrichtung der Bearbeitungsmaschine eine Speichereinrichtung auf, in welcher die Detektionsdaten bzw. die erstellten Steuerbefehle gespeichert werden, womit die Detektionsdaten bzw. erstellten Steuerbefehle auch zeitversetzt an die Antriebseinrichtung der Überführeinrichtung übertragbar sind.

Alternativ oder ergänzend weist die Werkstückauflage eine Steuereinrichtung auf, welche die von dem Mittel zur Detektion weitergeleiteten Detektionsdaten in Steuerbefehle verarbeitet. Des Weiteren initiiert die Überführeinrichtung die Überführung des zumindest einen Auflageelements von einer ersten Position in wenigstens eine weitere Position, womit das zumindest eine Auflageelement präzise in eine entsprechende Position überführbar ist.

Vorteilhaft ist die Steuereinrichtung der Werkstückauflage mit den Antriebseinrichtungen der Überführeinrichtung verbunden und leitet die erstellten Steuerbefehle an die entsprechenden Antriebseinrichtungen weiter, womit die Antriebseinrichtungen einen vollautomatischen Bearbeitungsprozess durchführen können.

Vorteilhaft ist die Steuereinrichtung der Bearbeitungsmaschine mit der Steuereinrichtung der Werkstückauflage verbunden, sodass ein einfacher Austausch der Detektionsdaten bzw. Steuerbefehle möglich ist.

Bevorzugt weist zumindest eines der Auflageelemente mehrere in einem Abstand zueinander angeordnete Scheibenabschnitte auf, die auf einer gemeinsamen Rotationsachse angeordnet sind, wobei die Auflagestellen umfänglich auf den Scheibenabschnitten des zumindest einen Auflageelements ausgebildet sind. Damit ist eine stabile Auflage mit einer geringen Kontaktfläche für das flächige Werkstück gewährleistet.

Vorzugsweise sind zumindest zwei benachbarte Auflageelemente, miteinander verbunden, wodurch die Stabilität der Werkstückauflage verbessert ist.

Vorteilhaft sind zumindest zwei benachbarte Auflageelemente, federbeaufschlagt miteinander verbunden, womit eine flexible Auflagesituation in der Werkstückauflage gewährleistet ist, welche dynamisch änderbar ist. Somit lassen sich bereits überführte benachbarte Auflageelemente in einer einfachen Art und Weise wieder in die ursprüngliche Position bzw. die Ruheposition in der Werkstückauflage rücküberführen.

Bevorzugt ist zumindest ein Aussparungselement für ein Werkzeug der Bearbeitungsmaschine vorgesehen, wobei das zumindest eine Aussparungselement relativ zu der Werkstückauflageebene zur Überführung von zumindest einem der Auflageelemente versetzbar ist. Damit lässt sich das zumindest eine Auflageelement einfach überführen und der Arbeitsbereich des Werkzeugs in der Bearbeitungsmaschine einfach absichern, wodurch die Auflageelemente vom Werkzeug unbeeinflusst bleiben.

Vorteilhaft ist das Aussparungselement mit einer Antriebseinrichtung zur Versetzung des Aussparungselements verbunden, wobei die Antriebseinrichtung mit der Steuereinrichtung der Bearbeitungsmaschine oder der Überführeinrichtung verbunden ist. Mit dieser Massnahme lässt sich ein kontrolliertes und präzises Versetzen des Aussparungselements realisieren.

Vorzugsweise ist zumindest ein Auflageelement magnetisch ausgebildet, womit eine kontaktfreie Überführung des zumindest einen Auflageelements erfolgt.

Alternativ ist zumindest ein Auflageelement magnetisierbar ausgebildet, womit eine kontaktfreie Überführung des zumindest einen Auflageelements präzise gesteuert ausführbar ist.

Vorteilhaft ist das zumindest eine Auflageelement mittels einer versetzbaren Magnetisiereinrichtung als Überführeinrichtung entlang einer Ebene überführbar, die parallel zur Werkstückauflageebene verläuft. Womit die Werkstückauflage einfach aufgebaut ist und die Überführung des zumindest einen Auflageelements kontaktfrei ausführbar ist.

Eine erfindungsgemässe Bearbeitungsmaschine für flächige Werkstücke umfasst die zuvor beschriebenen Werkstückauflagen, welche zumindest einen Teil der vorgenannten Merkmale aufweisen, sowie zumindest ein Werkzeug zur Bearbeitung des flächigen Werkstücks, wobei das Werkzeug relativ zu der Werkstückauflage versetzbar ist. Die Verwendung der oben beschriebenen Werkstückauflage in dieser Bearbeitungsmaschine verhindert eine Kollision des Werkzeugs der Bearbeitungsmaschine mit dem zumindest einen Auflageelement der Werkstückauflage bei der Bearbeitung des Werkstücks.

Das erfindungsgemässe Verfahren zum Bearbeiten eines flächigen Werkstücks mit der zuvor beschriebenen Bearbeitungsmaschine umfasst die folgenden Schritte:
Das Positionieren des zu bearbeitenden flächigen Werkstücks auf der Werkstückauflage (Schritt a)). Des Weiteren erfolgt das Positionieren des Werkzeugs zur Bearbeitung des flächigen Werkstücks (Schritt b)). Anschliessend erfolgt das Überführen, zumindest eines der Auflageelemente der Werkstückauflage entlang einer Ebene, die parallel zu der Werkstückauflageebene verläuft, aus dem Arbeitsbereich heraus, wenn zumindest ein Auflageelement im Arbeitsbereich des zur Bearbeitung positionierten Werkzeugs des Bearbeitungskopfs der Bearbeitungsmaschine ermittelt wird (Schritt c)). Anschliessend erfolgt das Ausführen des Bearbeitungsprozesses (Schritt d)).

Somit muss der Bearbeitungsprozess bzw. der Schachtelungsplan hinsichtlich der Position der Auflageelemente nicht angepasst werden, da einzelne Auflageelemente im Bedarfsfall von einer Position auf eine weitere Position in der Werkstückauflage in der Werkstückauflagenebene überführt werden. Somit wird eine Kollision von Werkzeug und Werkstückauflage beim Bearbeiten des flächigen Werkstücks verhindert.

Vorteilhaft erfolgt das Positionieren des zu bearbeiteten flächigen Werkstücks (Schritt a)) an einem Anschlag der Werkstückauflage oder an einem Anschlag der Bearbeitungsmaschine. Damit wird ein besonders einfaches und genaues Positionieren des zu bearbeiteten flächigen Werkstücks gewährleistet.

Vorteilhaft erfolgt im Schritt c) ein Verschieben von zumindest einem der Auflageelemente der Werkstückauflage entlang einer Ebene, die parallel zu der von der Werkstückauflageebene verläuft, wodurch ein besonders einfacher Bewegungsablauf realisierbar wird.

Vorzugsweise wird nach dem Positionieren des zu bearbeitenden flächigen Werkstücks auf der Werkstückauflage (Schritt a)) das zu bearbeitende flächige Werkstück mittels der Werkstückfixiereinrichtung fixiert. Mit dieser Massnahme verbleibt das flächige Werkstück ortsfest relativ zur Werkstückauflage, womit ein vereinfachter Bearbeitungsprozess mit dem Werkzeug ausführbar ist.

Vorteilhaft erfolgt das Fixieren des zu bearbeitenden flächigen Werkstücks an einem Anschlag der Fixierungseinrichtung, wodurch das zu bearbeitende flächige Werkstück präzise fixiert wird.

Vorzugsweise wird die gesamte Werkstückauflage entlang der Ebene versetzt, womit alle Auflageelemente gleichzeitig von einer ersten Position in wenigstens eine weitere Position überführt werden. Mit dieser einfachen Massnahme wird eine Kollision des Werkzeugs mit dem zumindest einem Auflageelement einfach verhinderbar.

Bevorzugt wird das Aussparungselement für das Werkzeug relativ zu der Werkstückauflageebene versetzt, wobei zumindest ein Auflageelement von einer ersten Position in wenigstens eine weitere Position überführt wird. Mit dieser Massnahme verbleibt die Position des Werkstücks relativ zum Werkzeug unverändert, sodass ein schneller Bearbeitungsprozess ausführbar ist.

Vorzugsweise werden die Auflagestellen des zumindest einen zu überführenden Auflageelements entlang der Werkstückauflagenebene gerollt, wodurch die auf das flächige Werkstück wirkenden Kräfte minimiert werden.

Bevorzugt wird das zumindest eine magnetische oder magnetisierbare Auflageelement mithilfe einer Magnetisiereinrichtung aktiviert und von einer Position in wenigstens eine weitere Position überführt. Mit dieser Massnahme lässt sich das zumindest eine Auflageelement einfach überführen.

Vorzugsweise werden nach dem Schritt b) die Positionsdaten des flächigen Werkstücks auf der Werkstückauflage erfasst. Damit sind unerwünschte Positionen des Werkstücks auf der Werkstückauflage einfach korrigierbar und in weiterer Folge der Schachtelungsplan am Werkstück einfach optimierbar.

Ein Computerprogrammprodukt, welches nach dem Laden in die Speichereinrichtung der Bearbeitungsmaschine oder der Überführeinrichtung mithilfe eines Mittels zur Detektion Detektionsdaten erkennt und mittels der Recheneinrichtung der Steuereinrichtung zumindest einen Steuerbefehl erstellt, bewirkt anschliessend das zuvor beschriebene Verfahren zum Bearbeiten eines flächigen Werkstücks mit der Bearbeitungsmaschine samt Werkstückauflage. Damit lässt sich die Bearbeitungsmaschine automatisch und einfach betreiben. Mit anderen Worten wird die Bearbeitungsmaschine mit einem Computerprogramm, das in der Speichereinrichtung gespeichert sein kann oder von einer externen Instanz (z.B. Server) als ausführbares Programm heruntergeladen werden kann, angesteuert, um das zuvor beschriebene Verfahren zum Bearbeiten eines flächigen Werkstücks mit der Bearbeitungsmaschine samt Werkstückauflage auszuführen. Insbesondere dient das Computerprogramm zum Erzeugen von Steuerbefehlen auf Basis von Detektionsdaten, um die Auflageelemente bedarfsweise in einer andere Position zu überführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erste Ausführungsform einer erfindungsgemässen Bearbeitungsmaschine in einer perspektivischen Darstellung,
- Fig. 2: einen Detailausschnitt der in der Fig. 1 dargestellten Bearbeitungsmaschine,
- Fig. 3: einen weiteren Detailausschnitt der Werkstückauflage der in der Fig. 1 dargestellten Bearbeitungsmaschine,
- Fig. 4: eine schematische Darstellung der Werkstückauflage in einer ersten Position in einer Seitenansicht,
- Fig. 5: eine schematische Darstellung der in der Fig. 4 dargestellten Werkstückauflage in einer zweiten Position in einer Seitenansicht,
- Fig. 6: die Werkstückauflage der in der Fig. 1 dargestellten Bearbeitungsmaschine in einer perspektivischen Darstellung,
- Fig. 7: eine alternative Ausführungsform der in der Fig. 6 dargestellten Werkstückauflage in einer perspektivischen Darstellung,
- Fig. 8: eine alternative Ausführungsform einer Werkstückauflage für die in der Fig. 1 dargestellte Bearbeitungsmaschine in einer schematischen Darstellung in Seitenansicht,
- Fig. 9: eine weitere alternative Ausführungsform einer Werkstückauflage für die in der Fig. 1 dargestellte Bearbeitungsmaschine in einer schematischen Darstellung in Seitenansicht,
- Fig. 10: die erfindungsgemässe Bearbeitungsmaschine gemäss Fig. 1 mit einer weitere Ausführungsform der Werkstückauflage und der Überführeinrichtung mit einem Auflageelement in einer ersten Position in einer perspektivischen Darstellung, und
- Fig. 11: die Bearbeitungsmaschine gemäss Fig. 10 mit dem Auflageelement der Werkstückauflage in einer weiteren Position in einer perspektivischen Darstellung.

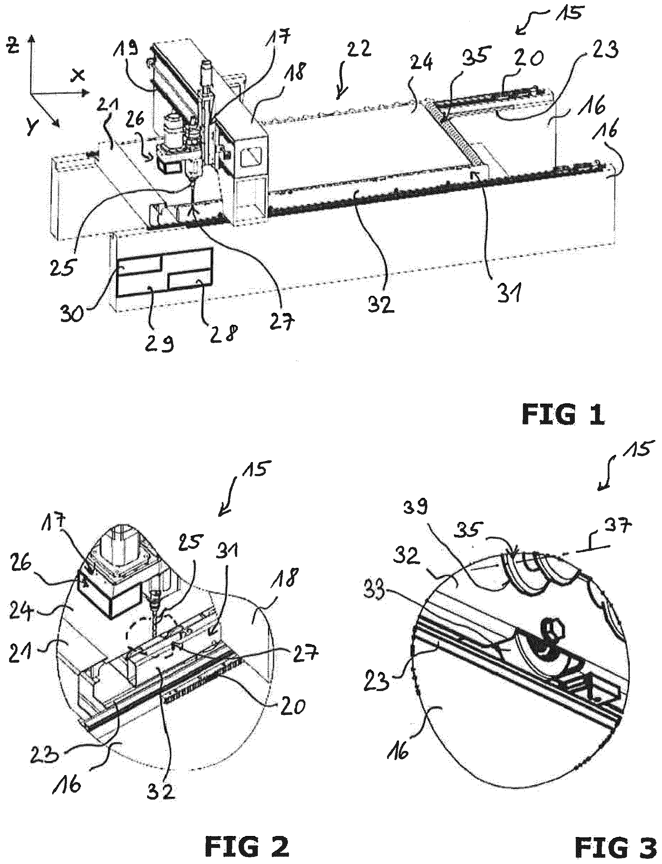

Die Figuren 1 bis 6 zeigen eine Laserbearbeitungsmaschine als Bearbeitungsmaschine 15 mit einer Basis 16, mit einem Laserschneidkopf als Bearbeitungskopf 17, mit einer Werkstückauflage 31 für ein flächiges Werkstück 24. Eine Brücke 18 ist an der Basis 16 der Bearbeitungsmaschine 15 angeordnet. Die Basis 16 weist eine Führungseinrichtung 20 auf, an welcher die Brücke 18 in X-Richtung bewegbar angeordnet ist. Das flächige Werkstück 24 liegt auf den Auflageelementen 35 auf und wird aufgrund seiner Gewichtskraft auf den Auflageelementen 35 stabil gehalten.

Des Weiteren ist eine Werkstückfixiereinrichtung 21 zum Fixieren des Werkstücks 24 an der Basis 16 angeordnet. Die Basis 16 weist eine Überführeinrichtung 22 für die Werkstückauflage 31 mit Überführungsschienen 23 auf, an welchen die Werkstückauflage 31 in X-Richtung bewegbar angeordnet ist. Dafür umfasst die Überführeinrichtung 22 weiter zumindest eine Antriebseinrichtung der Bearbeitungsmaschine 15 (nicht gezeigt).

Der Bearbeitungskopf 17 ist an der Brücke 18 angeordnet und in Y-Richtung entlang eines Schienenpaares 19 bewegbar angeordnet. Des Weiteren ist der Bearbeitungskopf 17 relativ zum Werkstück 24 bewegbar. Das Werkzeug 25 ist am Bearbeitungskopf 17 angeordnet, welches bedarfsweise mit einem weiteren Werkzeug austauschbar ist. Als Werkzeug 25 wird nicht abschliessend aufgezählt ein Bohrwerkzeug, ein Senkwerkzeug, ein Schneidwerkzeug, wie beispielsweise ein Laserschneidwerkzeug, und ein Schweisswerkzeug verwendet.

Der Bearbeitungskopf 17 umfasst ein Mittel 26 zur Detektion des Arbeitsbereichs 27 des Werkzeugs 25, welches mit einer Steuereinrichtung 29 der Bearbeitungsmaschine 15 verbunden ist und Detektionsdaten, wie beispielsweise Arbeitsbereichsdaten, an diese sendet. Die Steuereinrichtung 29 weist eine Recheneinrichtung 28 auf, welche aus den Detektionsdaten Steuerbefehle erstellt. Die Steuereinrichtung 29 und/oder die Recheneinrichtung 28 können mittels Software gesteuert werden, insbesondere durch ein Computerprogramm. Das Computerprogramm kann in einer Speichereinrichtung 30 vorgehalten werden oder über eine Datenanbindung (Bussystem) von einer externen Instanz (z.B. zentraler Server) heruntergeladen werden. Die Detektionsdaten werden zumindest teilweise in der Speichereinrichtung 30 abgelegt. Als Mittel 26 zur Detektion dient nicht abschliessend aufgezählt eine Kamera oder ein optischer Abstandssensor. Die Detektionsdaten umfassen nicht abschliessend aufgezählt auch Positionsdaten bezüglich der Position des Werkzeugs 25 relativ zum Werkstück 24 oder Positionsdaten bezüglich der Position des Werkzeugs 25 relativ zur Werkstückauflage 31. Alternativ oder ergänzend werden auch Daten vom Werkzeug 25 detektiert. Beispielsweise sind beim Laserschneiden, die Daten des Schneidstrahls, wie Gasdruck, Schneidtemperatur und der gleichen detektierbar.

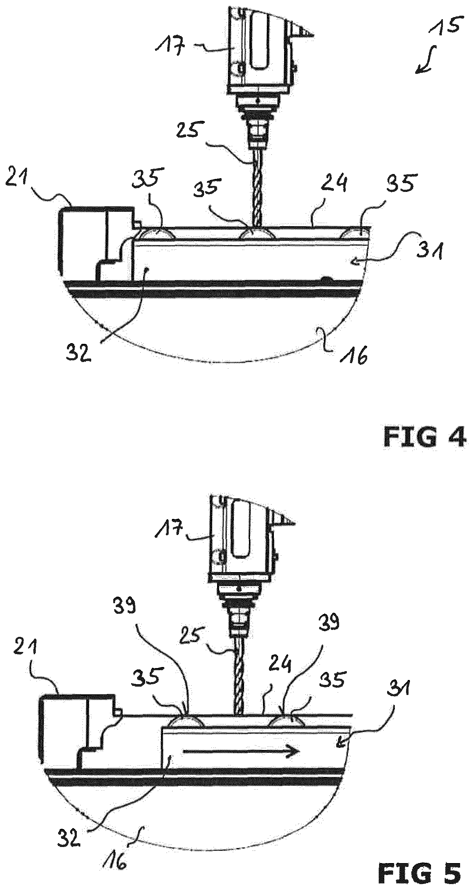

Die Werkstückauflage 31 weist am Werkstückauflagerahmen 32 mehrere Überführungsrollen 33 auf, welche zur Überführeinrichtung 22 gehören und die Werkstückauflage 31 in X-Richtung, entlang des Überführungsschienenpaars 23, bewegbar machen. Die Überführungsrollen sind paarweise am Werkstückauflagerahmen 32 angeordnet. Am Werkstückauflagerahmen 32 sind weiterhin mehrere Auflageelemente 35 angeordnet, welche die Werkstückauflageebene 36 aufspannen und auf welche das Werkstück 24 aufliegen kann. Die Werkstückauflage 31 ist mithilfe der Überführungsrollen 33 relativ zur Werkstückfixiereinrichtung 21 bewegbar, sodass die Auflageelemente 35 auch unter Auflast des auf diesen aufliegende Werkstücks 24 im Arbeitsbereich 27 des Werkzeugs 25 von einer Position in eine weitere Position überführt werden. Beispielsweise wird die Werkstückauflage 31 genau dann entlang des Überführungsschienenpaars 23 bewegt, wenn das Werkzeug 25 direkt über einem der Auflageelemente 35 angeordnet ist, wie in Fig. 4 und Fig. 5 dargestellt.

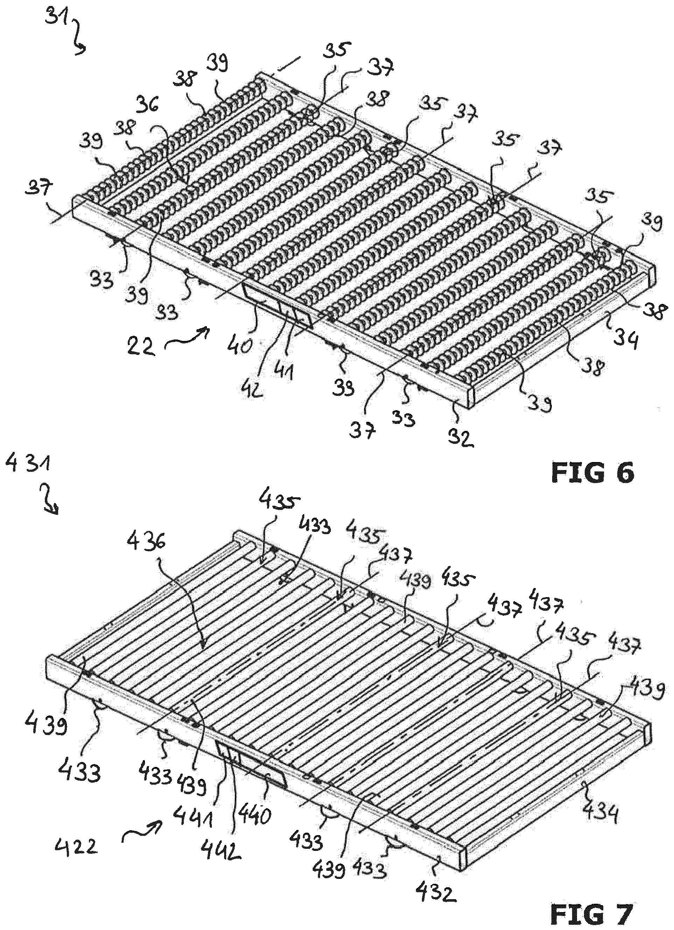

Die Figur 6 stellt die Werkstückauflage 31 im Detail dar. Am Werkstückauflagerahmen 32 sind mehrere Überführungsrollen 33 paarweise angeordnet, welche in das Überführungsschienenpaar 23 eingreifen und sich daran entlang des Überführungsschienenpaars 23 bewegen. Im Werkstückauflagerahmen 32 sind mehrere Auflageelemente 35 angeordnet, welche mehrere in einem Abstand zueinander angeordnete Scheibenabschnitte 38 aufweisen. Die Auflageelemente 35 erstrecken sich parallel zur Werkstückauflagerahmenseite 34 des Werkstückauflagerahmens 32. Die mehreren Auflageelemente 35 spannen eine Werkstückauflageebene 36 in X-Richtung und Y-Richtung (XY-Ebene) auf und weisen jeweils eine Rotationsachse 37 auf, um welche das jeweiliae Auflageelement 35 rotierbar ist. Die Rotationsachsen 37 sind jeweils parallel zur Werkstückauflageebene 36 ausgerichtet. Die Auflageelemente 35 der Werkstückauflage 31 sind dazu konfiguriert, auch unter Auflast des Werkstücks 24 durch eine Bewegung parallel zur Werkstückauflageebene 36 von einer ersten Position in eine weitere Position überführt zu werden. Dafür weisen die Auflageelemente 35 mehrere Auflagestellen 39 auf, welche am Umfang der Scheibenabschnitte 38 ausgebildet sind. Das Werkstück 24 liegt im positionierten Zustand dabei mit dessen Gewichtskraft auf den Auflagestellen 39 auf.

Des Weiteren sind die Auflagestellen 39 in der vorliegenden Ausführungsform der Auflageelemente 35 mit einer reibungsvermindernden Beschichtung aus der Gruppe der Molybdänbeschichtung, Molybdänsulfidbeschichtung, Graph itbesch ichtun g, Diamantbeschichtung, Kunststoffbeschichtung und Keramikbeschichtung ausgerüstet. Alternativ sind die Auflagestellen des zumindest einen Auflageelements mit einer beschädigungsvermindernden Beschichtung ausgebildet, z.B. einer Kunststoffbeschichtung oder einer Gummibeschichtung, so dass Sie keine Beschädigungen in Form von Einprägungen, Kratzern o.ä. am Werkstück verursachen und/oder das Werkstück keine Beschädigungen and den Auflagelementen verursacht. Weiter alternativ, weisen die Auflagelemente keine Beschichtung auf.

Die Werkstückauflage 31 weist im Bereich des Werkstückauflagerahmens 32 Mittel 40 zur Detektion zumindest eines Auflageelements 35 im Bezug zum Arbeitsbereich 27 des Werkzeugs 25 der Bearbeitungsmaschine 15 auf, welches mit einer Steuereinrichtung 29 der Bearbeitungsmaschine 15 verbunden ist und Detektionsdaten, wie beispielsweise Positionsdaten, an diese sendet. Die Positionsdaten werden zumindest teilweise in einer Speichereinrichtung 30 der Bearbeitungsmaschine 15 abgelegt. Als Mittel 40 zur Detektion dient nicht abschliessend aufgezählt eine Kamera, ein optischer Abstandssensor oder ein mechanischer Anschlagssensor. Die Positionsdaten umfassen nicht abschliessend aufgezählt Daten bezüglich der Position des Werkzeugs 25 relativ zum Werkstück 24, Daten bezüglich der Position des Werkzeugs 25 relativ zur Werkstückauflage 31 oder Daten bezüglich der Position der Auflageelemente 35 im Bereich des Werkzeugs 25 der Bearbeitungsmaschine 15. Die Detektionsdaten, beispielsweise die Positionsdaten eines Auflageelements 35, werden an die Überführeinrichtung 22 weitergegeben, sodass bedarfsweise eine Überführung eines oder mehrerer Auflageelemente 35 von einer ersten Position in eine weitere Position initiiert wird, wenn sich ein Auflageelement 35 oder mehrere Auflageelemente 35 im oder beim Arbeitsbereich des Werkzeugs 25 befinden. Die Überführeinrichtung 22 weist bedarfsweise eine eigene Steuereinrichtung 41 mit einer Recheneinrichtung 42 auf, welche die Detektionsdaten in Steuerbefehle verarbeitet und die Überführung eines oder mehrerer Auflageelemente 35 von einer ersten Position in eine weitere Position initiiert. Dafür weist die Überführeinrichtung 22 eine eigene Antriebseinrichtung auf (nicht gezeigt). Auch diese Steuereinrichtung 41 und/oder diese Recheneinrichtung 42 können mittels Software bzw. einem Computerprogramm gesteuert werden.

Das Verfahren zum Bearbeiten des flächigen Werkstücks 24 wird mit Bezug auf die in den Fig. 1 bis Fig. 6 gezeigten Bearbeitungsmaschine 15 beschrieben und umfasst die nachfolgend dargestellten Schritte:
Zuerst erfolgt das Positionieren des zu bearbeitenden flächigen Werkstücks 24 auf der Werkstückauflage 31, sodass es auf den Auflagestellen 39 der Auflageelemente 35 aufliegt.

Dabei wird das flächige Werkstück 24 entweder an einem Anschlag im Bereich der Werkstückfixiereinrichtung 21 auf der Bearbeitungsmaschine 15 angeordnet und/oder die Position des Werkstücks 24 vom Mittel 26 zur Detektion erfasst, womit die Positionsdaten des flächigen Werkstücks 24 auf der Werkstückauflage 31 einfach erfassbar sind.

Anschliessend wird das zu bearbeitende flächige Werkstück 24 mittels der Werkstückfixiereinrichtung 21 fixiert und der Schachtelungsplan zur Bearbeitung des Werkstücks 24 übertragen.

Des Weiteren erfolgt, unter Berücksichtigung des festgelegten Schachtelungsplans, das Positionieren des Werkzeugs 25 zur Bearbeitung des flächigen Werkstücks 24. Anschliessend erfolgt das Detektieren der Positionsdaten des zumindest einem Auflageelements 35 mit dem Mittel 26 zur Detektion am Bearbeitungskopf 17 oder mit dem Mittel 40 zur Detektion an der Werkstückauflage 31, auf welchem das Werkstück 24 aufliegt.

Daraufhin erfolgt der Vergleich von den detektierten Positionsdaten mit den vorab bekannten Arbeitsbereich 27 des Werkzeugs 25. Sofern sich das zumindest eine Auflageelement 35 im Arbeitsbereich 27 des Werkzeugs 25 befindet, erfolgt das Erstellen von zumindest einem Steuerbefehl mit der Recheneinrichtung 28 der Steuereinrichtung 29.

Anschliessend erfolgt mithilfe des erstellten Steuerbefehls und der von diesem gesteuerten Antriebseinrichtung das Überführen bzw. Verschieben zumindest eines der Auflageelemente 35 der Werkstückauflage 31 entlang der Ebene (XY-Ebene), die parallel zu der Werkstückauflageebene 36 verläuft, aus dem Arbeitsbereich 27 des Werkzeugs heraus, wenn zumindest ein Auflageelement 35 im Arbeitsbereich 27 des zur Bearbeitung positionierten Werkzeugs 25 des Bearbeitungskopfs 17 der Bearbeitungsmaschine 15 ermittelt wird. Dabei werden die Auflageelemente 35 sowie deren Auflagestellen 39 um deren jeweiligen Rotationsachsen 37 gedreht und rollen am fixierten Werkstück 24 entlang der XY-Ebene.

Das Überführen des zumindest einen Auflageelements 35 der Werkstückauflage 31 erfolgt in dieser Ausführungsform der Werkstückauflage 31 mittels des Versetzens der gesamten Werkstückauflage 31 entlang der XY-Ebene

Abschliessend erfolgt das Ausführen des Bearbeitungsprozesses am Werkstück 24.

Das zuvor dargelegte Verfahren wird alternativ teilweise in einem Computerprogrammprodukt ausgeführt, welches nach dem Laden in die Speichereinrichtung 30 der Bearbeitungsmaschine 15 oder der Werkstückauflage 31 mithilfe eines der Mittel 26, 40 zur Detektion Detektionsdaten erkennt und mittels einer der Recheneinrichtungen 28, 42 der Steuereinrichtung 29, 41 Steuerbefehle erstellt. Anschliessend bewirkt das Com puterprogram m produkt das zuvor beschriebene Verfahren zum Bearbeiten eines flächigen Werkstücks 24 mit der Bearbeitungsmaschine 15 samt Werkstückauflage 31.

Die Figur 7 stellt eine weitere Ausführungsform einer Werkstückauflage 431 dar, welche sich von der in der Fig. 6 dargestellten und zuvor beschriebenen Werkstückauflage 31 lediglich hinsichtlich der Ausführungsform der Auflageelemente 435 unterscheidet.

Die Werkstückauflage 431 weist mehrere Auflageelemente 435 auf, welche kreiszylindrisch ausgebildet sind und am Werkstückauflagerahmen 432 angeordnet sind. Die Auflageelemente 435 spannen die Werkstückauflageebene 436 auf und weisen Auflagestellen 439 auf, welche an der Zylindermantelfläche der Auflageelemente 435 ausgebildet sind und können gehärtet oder mit einer reibungsvermindernden oder beschädigungsverhindernden Beschichtung versehen sein. Die Auflageelemente 435 sind parallel zur Werkstückrahmenseite 434 angeordnet und sind jeweils um deren Rotationsachsen 437 drehbar gelagert. Wie bereits zuvor dargestellt, weist der Werkstückauflagerahmen 432 mehrere Überführungsrollen 433 auf, welche paarweise am Werkstückauflagerahmen 432 angeordnet sind.

Die Überführeinrichtung 422 weist eine eigene Steuereinrichtung 441 mit einer Recheneinrichtung 442 auf und weist weiterhin ein eigenes Mittel 440 zur Detektion von Detektionsdaten auf. Die Steuereinrichtung 441 verarbeitet die Detektionsdaten in Steuerbefehle und initiiert die Überführung eines oder mehrerer Auflageelemente 435 von einer ersten Position in eine weitere Position. Dafür weist die Überführeinrichtung 422 eine eigene Antriebseinrichtung auf (nicht gezeigt).

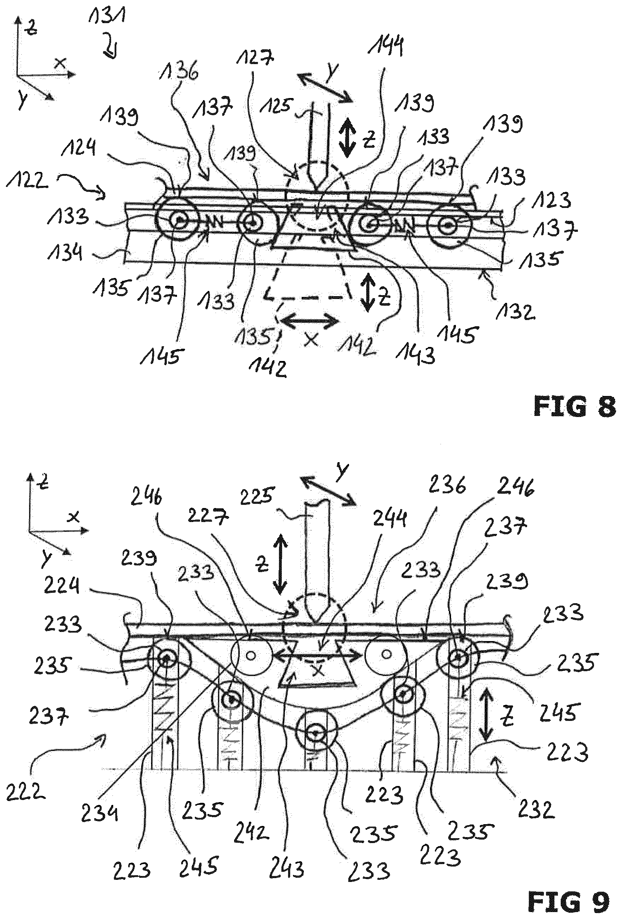

Die in der Figur 8 gezeigte alternative Werkstückauflage 131 weist zwischen den Auflageelementen 135 ein Aussparungselement 142 für das Werkzeug 125 auf. Das Werkstück 124 liegt auf den Auflagestellen 139 der Auflageelemente 135 auf, welche mit einer reibungsvermindernden Beschichtung beschichtet sind. Das Aussparungselement 142 weist einen Aussparungsraum 143 sowie eine Aussparungsöffnung 144 auf, wobei das Werkzeug 125 im Bearbeitungsprozess über die Aussparungsöffnung 144 in den Aussparungsraum 143 des Aussparungselements 142 eindringen kann. Das Aussparungselement 142 ist sowohl relativ zum Werkzeug 125 bzw. zum Werkstück 124 (Z-Richtung) wie auch parallel zur Werkstückauflageebene 136 (XY-Ebene) versetzbar. Das Aussparungselement 142 wird bedarfsweise unmittelbar in den Arbeitsbereich 127 des Werkzeugs 125 positioniert, sodass die dort vorhandenen Auflageelemente 135 durch eine Bewegung parallel zur Werkstückauflageebene 136 (XY-Ebene) von einer Position in eine weitere Position überführt werden. Das Aussparungselement 142 ist somit ein weiterer Bestandteil der Überführeinrichtung 122.

Der Werkstückauflagerahmen 132 weist an zwei gegenüberliegenden Werkstückrahmenseiten 134 eine Ausnehmung mit einem Überführungsschienenpaar 123 auf. Die Auflageelemente 135 weisen an deren gegenüberliegenden Enden jeweils eine Überführungsrolle 133 auf. Die Überführungsrollen 133 der Auflageelemente 135 greifen in das Überführungsschienenpaar 123 ein, womit die Auflageelemente 135 entlang des Überführungsschienenpaars 123 geführt sind. Jeweils zwei Auflageelemente 135 sind mithilfe einer Federeinrichtung 145 miteinander verbunden sowie jeweils um deren Rotationsachsen 137 rotierbar. Das Aussparungselement 142 ist mit einer Antriebseinrichtung zur Versetzung des Aussparungselements 142 (nicht gezeigt) verbunden, wobei diese Antriebseinrichtung mit der Steuereinrichtung der Bearbeitungsmaschine 15 oder der Werkstückauflage 131 verbunden ist.

Die in der Figur 9 gezeigte Werkstückauflage 231 weist zwischen den Auflageelementen 235 und dem Werkstück 224 ein Aussparungselement 242 mit integrierten Auflagelementen 234 auf. Das Werkstück 224 liegt auf den Auflagestellen 239 der Auflageelemente 235 auf, welche mit einer reibungsvermindernden Beschichtung beschichtet sind. Das Aussparungselement 242 weist einen Aussparungsraum 243 sowie eine Aussparungsöffnung 244 auf und ist parallel zur Werkstückauflageebene 236 (XY-Ebene) versetzbar, sodass die dort positionierten Auflageelemente 235 von einer Position in eine weitere Position überführt werden. Damit ist das Aussparungselement 242 ein Bestandteil der Uberführeinrichtung 222. Die integrierten Auflageelemente 234 sind jeweils zu beiden Seite der Aussparungsöffnung 243 angeordnet und erlauben ein Abrollen des Aussparungselements 242 an der diesem zugewandten Seite des Werkstücks 224. Das Aussparungselement 242 weist Auflagestellen 246 auf, auf welchen das Werkstück 224 aufliegt. Die Auflageelemente 235 sind hier miteinander verbunden und sind weiter mithilfe einer Federeinrichtung 245 mit dem Werkstückauflagerahmen 232 verbunden. Die somit federnd gelagerten Auflageelemente 235 sind relativ zum Werkstückauflagerahmen 232 bewegbar. Darüber hinaus weisen die Auflageelemente 235 jeweils Überführungsrollen 233 auf, welche in das vertikal angeordnet Überführungsschienenpaar 223 des Werkstückauflagerahmens 232 eingreifen. Das Aussparungselement 242 wird bedarfsweise unmittelbar in den Arbeitsbereich 227 des Werkzeugs 225 eingeführt. Das Aussparungselement 242 ist mit einer Antriebseinrichtung zur Versetzung des Aussparungselements 242 (nicht gezeigt) verbunden, wobei diese Antriebseinrichtung mit der Steuereinrichtung der Werkstückauflage 231 oder der Bearbeitungsmaschine 15 verbunden ist.

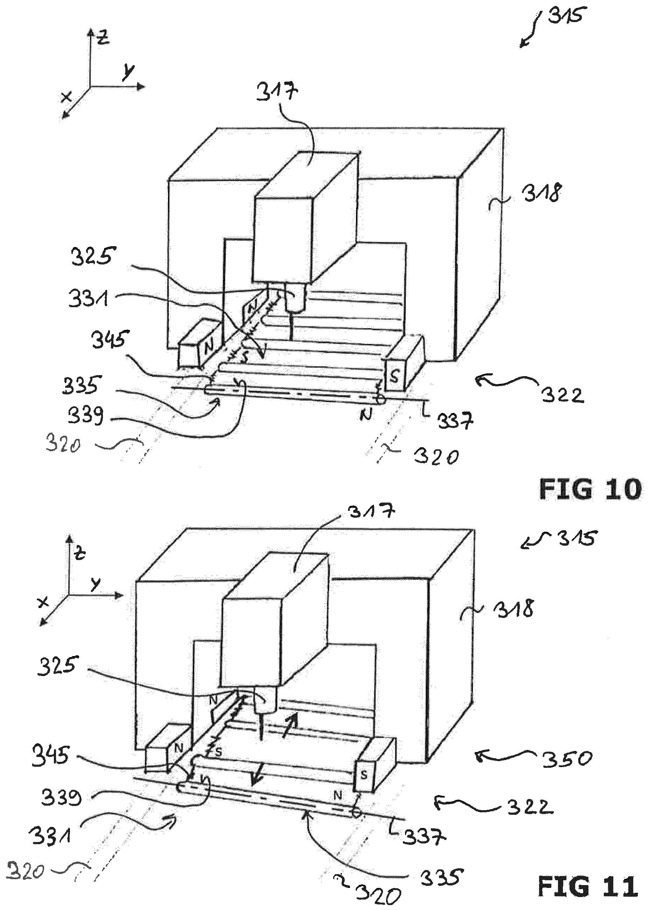

Die Figuren 10 und 11 zeigen eine weitere Ausführungsform einer Bearbeitungsmaschine 315, welche sich hinsichtlich der zuvor dargestellten Bearbeitungsmaschine 15 lediglich hinsichtlich eines Teils der Merkmale der Überführeinrichtung 322 unterscheidet. Die Bearbeitungsmaschine 315 zeigt eine entlang der Führungseinrichtung 320 bewegbare Brücke 318 samt einem Bearbeitungskopf 317 und einem daran angeordneten Werkzeug 325. Weiters weist die Bearbeitungsmaschine 315 eine Werkstückauflage 331 und eine Magnetisiereinrichtung 350 als Überführeinrichtung 322 zum Überführen der Auflageelemente 335 von einer Position in eine weitere Position auf. Die Auflageelemente 335 der Werkstückauflage 331 bestehen, zumindest bereichsweise, aus einem magnetischen Material. Die Magnetisiereinrichtung 350 ist in der dargestellten Ausführungsform an der Brücke 318 der Bearbeitungsmaschine 315 angeordnet und ist mit der Brücke 318 entlang der XY-Ebene versetzbar, welche parallel zur Werkstückauflageebene 336 ausgerichtet ist. Alternativ ist die Magnetisiereinrichtung 350 als eine separate Einheit und beispielsweise unabhängig von der Brücke 318 versetzbar. Die Magnetisiereinrichtung 350 weist mehrere Permanentmagnete oder mehrere Elektromagnete auf, welche einzelne oder mehrere Auflageelemente 335 entlang der Werkstückauflageebene 336 bewegen. Die Auflageelemente 335 sind an deren jeweiligen Enden miteinander mithilfe einer Federeinrichtung 345 verbunden und um deren Rotationsachsen 337 rotierbar. Die Auflageelemente 335 weisen Auflagestellen 339 auf, auf welche das Werkstück positioniert wird und die vorteilhaft mit einer reibungsvermindernden Beschichtung beschichtet sind.

In einer alternativen Ausführungsform bestehen die zuvor beschriebenen Auflageelemente 335 aus einem magnetisierbaren Material. Diese Auflageelemente 335 werden mithilfe der Magnetisiereinrichtung 350 vorgängig magnetisiert und sind dann mittels der Magnetisiereinrichtung 350 entlang der Werkstückauflageebene 336 überführbar.

Somit werden die zuvor beschriebenen Auflageelem ente 335 aus magnetischen oder magnetisierbaren Materialien mithilfe einer Magnetisiereinrichtung 350 zum Überführen aktiviert und anschliessend von einer Position in eine weitere Position überführt. Dazu wird die Magnetisiereinrichtung 350 mit der Brücke 318 entlang der Führungseinrichtung 320 bewegt, wobei die Auflagestellen 339 des zu überführenden Auflageelements 335 am Werkstück entlang der Werkstückauflagenebene 336 rollen.

Die dargestellte schwebende Werkstückauflage 331 der Bearbeitungsmaschine 315 weist in einer alternativen Ausführungsform den zuvor beschriebenen Werkstückauflagerahmen mit einem Überführungsschienenpaar auf. Die Auflageelemente 335 weisen an deren jeweiligen Enden jeweils eine Überführungsrolle auf. Damit sind magnetischen oder magnetisierbaren Auflageelemente 335 in den Überführungsschienen kontrollierter überführbar.

### Bezugszeichenliste

- 15: Bearbeitungsmaschine
- 16: Basis
- 17: Bearbeitungskopf
- 18: Brücke
- 19: Schienenpaar
- 20: Führungseinrichtung
- 21: Werkstückfixiereinrichtung
- 22: Überführeinrichtung
- 23: Überführungsschienenpaar
- 24: Werkstück
- 25: Werkzeug
- 26: Mittel zur Detektion
- 27: Arbeitsbereich
- 28: Recheneinrichtung
- 29: Steuereinrichtung
- 30: Speichereinrichtung
- 31: Werkstückauflage
- 32: Werkstückauflagerahmen
- 33: Überführungsrollen
- 34: Werkstückauflagerahmenseite
- 35: Auflageelemente
- 36: Werkstückauflageebene
- 37: Rotationsachse
- 38: Scheibenabschnitt
- 39: Auflagestelle
- 40: Mittel zur Detektion
- 41: Steuereinrichtung
- 42: Recheneinrichtung

- 122: Uberführeinrichtung
- 123: Überführungsschienenpaar
- 124: Werkstück
- 125: Werkzeug
- 127: Arbeitsbereich
- 131: Werkstückauflage
- 132: Werkstückauflagerahmen
- 133: Überführungsrollen
- 134: Werkstückrahmenseite
- 135: Auflageelement
- 136: Werkstückauflageebene
- 137: Rotationsachse
- 139: Auflagestellen

- 142: Aussparungselement
- 143: Aussparungsraum
- 144: Aussparungsöffnung
- 145: Federeinrichtung

- 222: Uberführeinrichtung
- 223: Überführungsschienenpaar
- 224: Werkstück
- 225: Werkzeug
- 227: Arbeitsbereich
- 231: Werkstückauflage
- 232: Werkstückauflagerahmen
- 233: Überführungsrollen
- 234.: Integrierte Auflageelemente
- 235: Auflageelement
- 236: Werkstückauflageebene
- 239: Auflagestellen

- 242: Aussparungselement
- 243: Aussparungsraum
- 244: Aussparungsöffnung
- 245: Federeinrichtung
- 246: Auflagestellen von 242

- 315: Bearbeitungsmaschine
- 317: Bearbeitungskopf
- 318: Brücke
- 320: Führungseinrichtung
- 322: Überführeinrichtung
- 325: Werkzeug
- 331: Werkstückauflage
- 335: Auflageelement
- 336: Werkstückauflageebene
- 337: Rotationsachse
- 339: Auflagestellen
- 345: Federeinrichtung
- 350: Magnetisiereinrichtung

- 422: Uberführeinrichtung
- 431: Werkstückauflage
- 432: Werkstückauflagerahmen
- 433: Überführungsrollen
- 434: Werkstückauflagerahmenseite
- 435: Auflageelemente
- 436: Werkstückauflageebene
- 437: Rotationsachse

- 439: Auflagestelle
- 440: Mittel zur Detektion
- 441: Steuereinrichtung
- 442: Recheneinrichtung

## Patentansprüche

1. Werkstückauflage (31; 131; 231; 331; 431) für eine Bearbeitungsmaschine (15; 315) für flächige Werkstücke (24; 124; 224), wobei die Werkstückauflage (31; 131; 231; 331, 431) mehrere Auflagestellen (39; 139; 239; 339; 439) für die Werkstücke (24; 124; 224) ausbildende Auflageelemente (35; 135; 234; 235; 335; 435) aufweist, die eine Werkstückauflageebene (36; 136; 236; 336; 436) für das flächige Werkstück (24; 124; 224) aufspannen, wobei eine Überführeinrichtung (22; 122; 222; 322; 422) zum Überführen wenigstens eines der Auflageelemente (35; 135; 234; 235; 335; 435) von einer ersten Position in wenigstens eine weitere Position vorgesehen ist, **dadurch gekennzeichnet, dass** zumindest ein Auflageelement (35; 135; 234; 235; 335; 435) dazu konfiguriert ist, auch unter Auflast eines Werkstücks (24; 124; 224) durch eine Bewegung parallel zur Werkstückauflageebene (36; 136; 236; 336; 436) von der ersten Position in die wenigstens eine weitere Position überführt zu werden.

2. Werkstückauflage (31; 131; 231; 331; 431) nach Anspruch 1, **dadurch gekennzeichnet, dass** das zumindest eine Auflageelement (35; 135; 234; 235; 335; 435) eine Rotationsachse (37; 137; 237; 337; 437) aufweist, um die das zumindest eine Auflageelement (35; 135; 235; 335; 435) rotierbar ist, wobei die Rotationsachse (37; 137; 237; 337; 437) parallel zur Werkstückauflageebene (36; 136; 236; 336; 436) ausgerichtet ist und vorteilhaft mehrere Auflageelemente (35; 135; 235; 335; 435) jeweils eine Rotationsachse (37; 137; 237; 337; 437) aufweisen, um die das jeweilige Auflageelement (35; 135; 234; 235; 335; 435) rotierbar ist, wobei die Rotationsachsen (37; 137; 237; 337; 437) parallel zur Werkstückauflageebene (36; 136; 236; 336; 436) ausgerichtet sind.

3. Werkstückauflage (31; 131; 231; 331; 431) nach Anspruch 1 oder 2, **dadurch gekennzeichnet, dass** die Auflagestellen (39; 139; 239; 339; 439) des zumindest einen Auflageelements (35; 135; 234; 235; 335; 435) mit einer reibungsvermindernden Beschichtung aus der Gruppe der Molybdänbeschichtung, Molybdänsulfidbeschichtung, Graphitbeschichtung, Diamantbeschichtungen, Kunststoffbeschichtungen und Keramikbeschichtungen ausgerüstet sind.

4. Werkstückauflage (31; 131; 231; 331; 431) nach einem der Ansprüche 1 bis 3, **dadurch gekennzeichnet, dass** eine Werkstückfixiereinrichtung (21) zum Fixieren des flächigen Werkstücks (24; 124; 224) vorgesehen ist.

5. Werkstückauflage (31; 131; 231; 331; 431) nach einem der Ansprüche 1 bis 4, **dadurch gekennzeichnet, dass** das zumindest eine Auflageelement (35; 135; 234; 235; 335; 435) kreiszylindrisch ausgebildet ist, wobei die Auflagestellen (39; 139; 239; 339; 439) an einer Zylindermantelfläche des zumindest einen Auflageelements (35; 135; 234; 235; 335; 435) ausgebildet sind.

6. Werkstückauflage (31; 131; 231; 331; 431) nach einem der Ansprüche 1 bis 5, **dadurch gekennzeichnet, dass** Mittel zur Detektion (26, 40; 440) zumindest eines Auflageelements (35; 135; 234; 235; 335; 435) im Arbeitsbereich (27; 127; 227) eines Werkzeugs (25; 125; 225; 325) der Bearbeitungsmaschine (15; 315) vorgesehen sind, die Detektionsdaten an die Überführeinrichtung (22; 122; 222; 322; 422) weitergeben, um ein Überführen des zumindest einen Auflageelements (35; 135; 234; 235; 335; 435) von einer ersten Position in wenigstens eine weitere Position zu initiieren.

7. Werkstückauflage (31; 131; 231; 331; 431) nach einem der Ansprüche 1 bis 4 oder 6, **dadurch gekennzeichnet, dass** zumindest eines der Auflageelemente (35; 135; 234; 235; 335; 435) mehrere in einem Abstand zueinander angeordnete Scheibenabschnitte (38) aufweist, die auf einer gemeinsamen Rotationsachse (37; 137; 237; 337; 437) angeordnet sind, wobei die Auflagestellen (39; 139; 239; 339; 439) umfänglich auf den Scheibenabschnitten (38) des zumindest einen Auflageelements (35; 135; 234; 235; 335; 435) ausgebildet sind.

8. Werkstückauflage (31; 131; 231; 331; 431) nach einem der Ansprüche 1 bis 7, **dadurch gekennzeichnet, dass** zumindest zwei benachbarte Auflageelemente (35; 135; 234; 235; 335; 435), vorteilhaft federbeaufschlagt, miteinander verbunden sind.

9. Werkstückauflage (31; 131; 231; 331; 431) nach einem der Ansprüche 1 bis 8, **dadurch gekennzeichnet, dass** zumindest ein Aussparungselement (142; 242) für ein Werkzeug (25; 125; 225; 325) der Bearbeitungsmaschine (15; 315) vorgesehen ist, wobei das zumindest eine Aussparungselement (142; 242) relativ zu der Werkstückauflageebene (36; 136; 236; 336; 436) zur Überführung von zumindest einem der Auflageelemente (35; 135; 234; 235; 335; 435) versetzbar ist.

10. Werkstückauflage (31; 131; 231; 331; 431) nach einem der Ansprüche 1 bis 9, **dadurch gekennzeichnet, dass** zumindest ein Auflageelement (35; 135; 234; 235; 335; 435) magnetisch oder magnetisierbar ausgebildet ist und vorteilhaft dieses zumindest eine Auflageelement (35; 135; 234; 235; 335; 435) mittels einer versetzbaren Magnetisiereinrichtung (350) als Überführeinrichtung (22; 122; 222; 322; 422) entlang einer Ebene überführbar ist, die parallel zu der von der Werkstückauflageebene (36; 136; 236; 336; 436) verläuft.

11. Bearbeitungsmaschine für flächige Werkstücke (24; 124; 224) mit einer Werkstückauflage (31; 131; 231; 331; 431) nach einem der Ansprüche 1 bis 10 sowie mit zumindest einem Werkzeug (25; 125; 225; 325) zur Bearbeitung des flächigen Werkstücks (24; 124; 224), wobei das Werkzeug (25; 125; 225; 325) relativ zu der Werkstückauflage (31; 131; 231; 331; 431) versetzbar ist.

12. Verfahren zum Bearbeiten eines flächigen Werkstücks (24; 124; 224) mit einer Bearbeitungsmaschine (15; 315) nach Anspruch 11, **gekennzeichnet durch** die folgenden Schritte:
a) Positionieren des zu bearbeitenden flächigen Werkstücks (24; 124; 224) auf der Werkstückauflage (31; 131; 231; 331; 431);
b) Positionieren des Werkzeugs (25; 125; 225; 325) zur Bearbeitung des flächigen Werkstücks (24; 124; 224);
c) Überführen, vorteilhaft Verschieben, zumindest eines der Auflageelemente (35; 135; 234; 235; 335; 435) der Werkstückauflage (31; 131; 231; 331; 431) entlang einer Ebene, die parallel zu der Werkstückauflageebene (36; 136; 236; 336; 436) verläuft, aus dem Arbeitsbereich (27; 127; 227) heraus, wenn zumindest ein Auflageelement (35; 135; 234; 235; 335; 435) im Arbeitsbereich (27; 127; 227) des zur Bearbeitung positionierten Werkzeugs (25; 125; 225; 325) des Bearbeitungskopfs der Bearbeitungsmaschine (15; 315) ermittelt wird; und
d) Ausführen des Bearbeitungsprozesses.

13. Verfahren nach Anspruch 12, **dadurch gekennzeichnet, dass** nach dem Positionieren des zu bearbeitenden flächigen Werkstücks (24; 124; 224) auf der Werkstückauflage (31; 131; 231; 331; 431) (Schritt a)) das zu bearbeitende flächige Werkstück (24; 124; 224) mittels der Werkstückfixiereinrichtung (21) fixiert wird.

14. Verfahren nach Anspruch 12 oder 13, **dadurch gekennzeichnet, dass** die gesamte Werkstückauflage (31; 131; 231; 331; 431) entlang der Ebene versetzt wird.

15. Verfahren nach Anspruch 12 bis 14, **dadurch gekennzeichnet, dass** das Aussparungselement (142; 242) für das Werkzeug (25; 125; 225; 325) relativ zu der Werkstückauflageebene (36; 136; 236; 336; 436) versetzt wird, wobei zumindest ein Auflageelement (35; 135; 234, 235; 335; 435) von einer ersten Position in wenigstens eine weitere Position überführt wird.

16. Computerprogramm zur Anwendung in einem Verfahren nach einem der vorstehenden Verfahrensansprüche, **dadurch gekennzeichnet, dass** zumindest das Überführen gemäß Schritt c) von Steuerbefehlen des Computerprogramms ausgeführt oder angesteuert wird, wenn das Computerprogramm auf einer computer-basierten Verarbeitungseinheit (28, 29, 41, 42, 441, 442) geladen oder ausgeführt wird.
